(19) Europäisches Patentamt / European Patent Office / Office européen des brevets

(11) **EP 4 250 608 A1**

(12) **EUROPEAN PATENT APPLICATION**
published in accordance with Art. 153(4) EPC

(43) Date of publication:
**27.09.2023 Bulletin 2023/39**

(21) Application number: **21893772.0**

(22) Date of filing: **05.11.2021**

(51) International Patent Classification (IPC):
**H04L /(2006.01)**

(52) Cooperative Patent Classification (CPC):
**H04L 45/00; H04L 45/74**

(86) International application number:
**PCT/CN2021/129000**

(87) International publication number:
**WO 2022/105625 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.11.2020 CN 202011321949**

(71) Applicants:
• **CHINA MOBILE COMMUNICATION CO., LTD.
RESEARCH INSTITUTE
Beijing 100053 (CN)**

• **CHINA MOBILE COMMUNICATIONS GROUP CO.,
LTD.
Beijing 100032 (CN)**

(72) Inventor: **CHENG, Weiqiang
Beijing 100032 (CN)**

(74) Representative: **GPI Brevets
1330, rue Guillibert de la Lauzière
EuroParc de Pichaury
Bât B2
13856 Aix en Provence Cedex 3 (FR)**

(54) **PACKET FORWARDING METHOD AND APPARATUS, COMMUNICATION DEVICE, AND READABLE STORAGE MEDIUM**

(57) A message forwarding method and apparatus, a communication device, a readable storage medium are provided. The method includes: obtaining first and second information of a first SID, wherein the first information indicates a location, in an SID list of a data packet, of a container where the first SID is located, the second information indicates a location of the first SID in the container; obtaining a location of the first SID in the SID list according to the first and the second information; copying the first SID and a second SID in the SID list to a current SID and a next SID in a destination address of the data packet, and sending the data packet; the second SID is a next SID of the first SID in the SID list, the second information is greater than or equal to 1 or 0.

Obtaining first information and second information of a first SID, wherein the first information indicates a location, in an SID list of a data packet, of a container where the first SID is located, and the second information indicates a location of the first SID in the container — 701

Obtaining a location of the first SID in the SID list according to the first information and the second information — 702

Copying the first SID and a second SID in the SID list to a current SID and a next SID in a destination address of the data packet, and sending the data packet — 703

FIG.7

EP 4 250 608 A1

**Description**

**CROSS-REFERENCE TO RELATED APPLICATION**

This application claims a priority to Chinese Patent Application No. 202011321949.3 filed in China on November 23, 2020, the disclosures of which are incorporated in their entirety by reference herein.

**TECHNICAL FIELD**

The present disclosure relates to the technical field of communications, and in particular, to a message forwarding method, a message forwarding apparatus, a communication device, and a readable storage medium

**BACKGROUND**

Segment Routing (SR) is a source routing technology, forms a path-oriented network architecture based on a Software Defined Network (SDN) concept, supports multi-level programmable requirements of a future network, and can meet connection requirements in an application scenario of a 5th generation (5G) ultra-large connection and a slice. SR-Multi-Protocol Label Switching (MPLS) is an SR solution formed based on a current mainstream MPLS forwarding plane. SRv6 is an SR solution extended based on an Internet Protocol Version 6 (IPv6). IPv6 is a subject technology of a new generation of networks, long-term consideration of SRv6 based on the IPv6 is an evolution trend of future networks, and a mechanism research on SRv6 technology is an industry hotspot.

A 128-bit segment identifier (SID) of a standard SRv6 uses an SID in an IPv6 address format, and compared with an SID in an MPLS label format, the SID in the IPv6 address format has a routing attribute, simplifies inter-domain path creation, and simplifies capability of establishing an end-to-end path in an IPv6 network. Meanwhile, the SRv6 SID supports programmable capability, can meet flexible network and service function processing, combines a cooperative support of a centralized control plane and a distributed control plane, can flexibly meet requirements of various services and network functions, and adapts to requirements of network and service development.

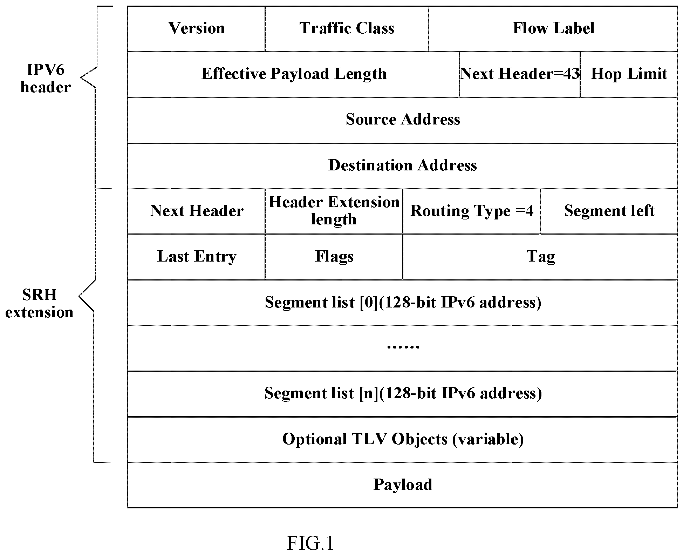

The SR encapsulates a series of instructions through a head node to guide a packet to pass through the network, and in a SRv6 architecture, one instruction is a 128-bit IPv6 address, as shown in FIG. 1, which is an encapsulation format of a standard SRv6 extension header.

It can be seen from the encapsulation format of the SRv6 extension header that an encapsulation length of the SRv6 extension header is 40 Bytes (IPv6 header) +8 Bytes (Segment Routing Header, SRH) +16 $\times$ N Byte (Segment List). Therefore, as the number of SIDs specified by the SRv6 increases, an additional overhead brought by the SRv6 extension header encapsulation becomes larger. In order to solve this problem, a function of shortening the SRv6 extension header needs to be realized.

Although the standard SRv6 has the above advantages, disadvantages are also obvious. Actual deployment of the SRv6 technology in the network currently mainly faces two challenges: 1. a SRv6 message overhead is large and a bandwidth utilization rate of a network link is low, which is only about 60% under a condition that a packet length is 256 Bytes and the SID is 8-layer; 2. SRv6 message processing has high requirement on a chip, it is difficult for an existing network equipment to support an in-depth copying operation of a SRH header, and 128-bit SRH header processing can reduce a processing efficiency of an existing chip.

The requirement on the number of layers of a Segment Routing (SR) tag in an operator network is relatively high. Taking a fifth generation (5G) bearer network as an example, as the 5G core network is deployed in a centralized manner, traffic of a base station needs to pass through a metropolitan area network and an IP backbone network. In a typical scenario, in the metropolitan area network, there are 8-10 nodes in an access ring, a convergence ring has 4-8 nodes, and a core ring also has 4-8 nodes; and in the IP backbone network, the traffic also needs to pass through a plurality of router nodes. At the same time, because of a controllable requirements of a network slice and a high-reliable Service-Level Agreement (SLA), the operator network needs to specify an explicit path, and an end-to-end SR tunnel may have 10 hops or even more. Therefore, at present, most domestic and oversea operators deploy Multi-Protocol Label Switching (MPLS), whereas SR operators all require supporting more than eight layers of segment identifier (Segment ID, SID) tags.

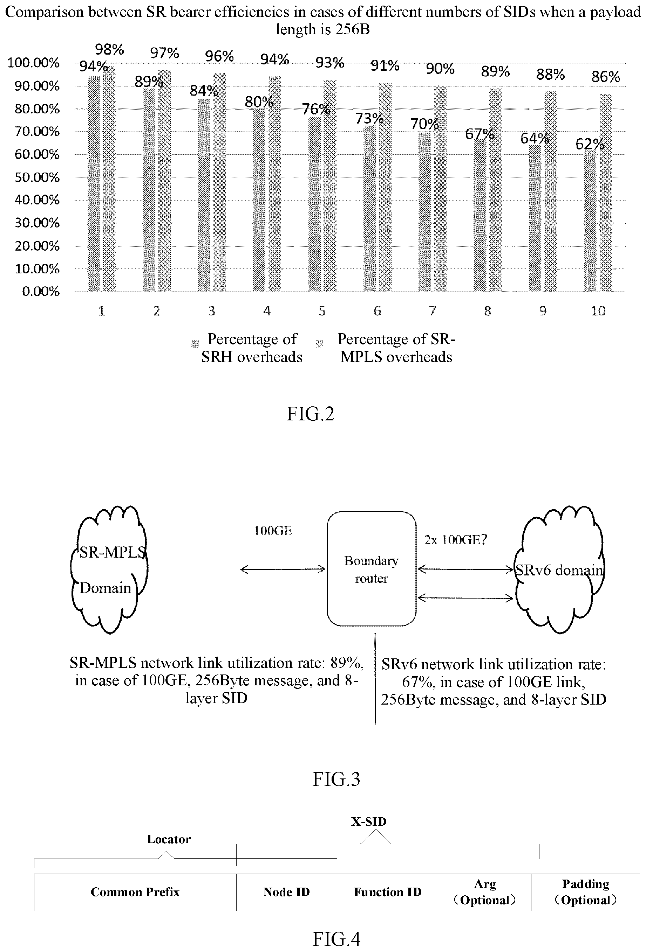

Currently, SRv6 is a SR solution extended based on IPv6, the SRv6 solution is based on SRH, a SID length of the SRv6 is a 128-bit segment ID. In case of 8-layer SID, an overhead of 128 bytes is brought to the packet, and for an application payload with an average length of 256 bytes, the overhead brought by the SRv6 exceeds 1/3, and the bandwidth utilization rate is reduced to 67% or less. In the same scenario, the overhead of SR-MPLS is only 32 bytes, and the bandwidth utilization rate is still 89%. Comparative analysis of bearer efficiency between SRv6 and SR-MPLS in cases of the number of SIDs being from 1 to 10 is shown in FIG. 2(simply comparing overheads of SRH and SR-MPLS SID):

The increase of the overheads causes a reduction in network utilization, and further, provides a greater challenge for supporting in-depth packet load balancing, in-band telemetry (In-Band Telemetry), and a Network Service Header (NSH).

In addition, deployment of the SRv6 may necessarily coexist with the SR-MPLS network, and due to different network utilization rates, a problem that network boundary interfaces are not balanced, resulting in waste of investment. Referring to FIG. 3, when a SR-MPLS network interfaces with a SRv6 network domain, and in case of a 100G link, a 256byte message, and an 8-layer SID, one 100 Gigabit Ethernet (GE) link in a SR-MPLS domain may require two 100GE links in the SRv6 domain for matching.

In an operator's application, the SRv6 needs a network chip to insert a field having a length of more than 128 Bytes in the message, the 128Byte field is equivalent to a 32-layer depth of a MPLS-SR tag, which exceeds a capability of a deployed network chip, and if a loop-back solution is used inside the chip, a network performance is greatly reduced and higher latency and jitter are introduced. In a redesigned network chip, it is necessary to further expand a bandwidth of an internal processing bus to support the SRv6, which is a key factor of chip cost and power consumption.

The SRv6 requires a network chip of an intermediate node to read a complete SRH, and then extracts, according to a position indicated by a pointer, a segment that needs to be processed, and forwards the segment. Comparing with the MPLS-SR which only needs to read an outermost label, introduced complexity further increases a processing delay of the network chip.

Low power consumption and a low delay are key factors of an operator's 5G solution, and an increase of the power consumption, the cost, and the delay brought to the network chip by complexity of the SRv6 brings a challenge to application of the SRv6.

According to the above analysis, an existing SRv6 message overhead, complexity of the network chip, and difficulty of smooth upgrading make it difficult to quickly deploy the SRv6 into an operator network, and need to be further evolved on basis of a SRv6 technology.

## SUMMARY

An objective of the embodiments of the present disclosure is to provide a message forwarding method, a message forwarding apparatus, a communication device, and a readable storage medium, to solve the problem of large overheads of an SRv6 message.

According to a first aspect, a message processing method performed by a first node is provided. The method includes:

obtaining first information and second information of a first Segment Identifier (SID), wherein the first information indicates a location, in an SID list of a data packet, of a container where the first SID is located, and the second information indicates a location of the first SID in the container;
obtaining a location of the first SID in the SID list according to the first information and the second information;
copying the first SID and a second SID in the SID list to a current SID and a next SID in a destination address of the data packet, and sending the data packet; wherein the second SID is a next SID next to the first SID in the SID list, and the second information is greater than or equal to 1, or the second information is equal to 0.

Optionally, the method includes:
in case that the second information is equal to 1, copying the first SID in the SID list to the current SID in the destination address of the data packet, and filling the next SID with a preset field.

Optionally, copying the first SID and the second SID in the SID list to the destination address of the data packet and sending the data packet includes:
copying the first SID and the second SID in the SID list to the destination address of the data packet, the first SID replacing the current SID, and the second SID replacing the next SID, wherein a type of the current SID is a global SID, and a type of the next SID is a local SID.

Optionally, copying the first SID and the second SID in the SID list to the destination address of the data packet, the first SID replacing the current SID, and the second SID replacing the next SID, includes:

determining whether the type of the current SID is the global SID, and whether the type of the next SID is the local SID;
in case that the type of the current SID is the global SID and the type of the next SID is the local SID, copying the first SID and the second SID in the SID list to the destination address of the data packet, the first SID replacing the current SID, and the second SID replacing the next SID.

Optionally, the method further includes:

configuring a range of global SIDs and a range of local SIDs in a unified manner with other nodes; or configuring a range of the global SID and a range of the local SID of the first node, and notifying the range of the global SID and the range of the local SID of the first node to other nodes through an Interior Gateway Protocol (IGP)/ Boundary Gateway Protocol (BGP) protocol.

Optionally, the destination address includes the current SID and the next SID; copying the first SID and the second SID in the SID list to the destination address of the data packet and sending the data packet includes:

copying the first SID and the second SID in the SID list to the destination address of the data packet, the first SID replacing the current SID, the second SID not replacing the next SID;
wherein the type of the current SID is the global SID, and the type of the next SID is the global SID; or the type of the current SID is the local SID, and the type of the next SID is the local SID; or the type of the current SID is the local SID, and the type of the next SID is the global SID.

According to a second aspect, a message processing apparatus is provided. The apparatus includes:

an obtaining module, configured to obtain first information and second information of a first Segment Identifier (SID), wherein the first information indicates a location, in an SID list of a data packet, of a container where the first SID is located, and the second information indicates a location of the first SID in the container;
a first processing module, configured to obtain a location of the first SID in the SID list according to the first information and the second information;
a sending module, configured to copy the first SID and a second SID in the SID list to a current SID and a next SID in a destination address of the data packet, and send the data packet;
wherein the second SID is a next SID next to the first SID in the SID list, and the second information is greater than or equal to 1, or the second information is equal to 0.

Optionally, the apparatus further includes:
a second processing module, configured to in case that the second information is equal to 1, copy the first SID in the SID list to the current SID in the destination address of the data packet, and fill the next SID with a preset field.
Optionally, the sending module is further configured to:
copy the first SID and the second SID in the SID list to the destination address of the data packet, the first SID replacing the current SID, and the second SID replacing the next SID, wherein a type of the current SID is a global SID, and a type of the next SID is a local SID.
Optionally, the sending module is further configured to:

determine whether the type of the current SID is the global SID, and whether the type of the next SID is the local SID;
in case that the type of the current SID is the global SID and the type of the next SID is the local SID, copy the first SID and the second SID in the SID list to the destination address of the data packet, the first SID replacing the current SID, and the second SID replacing the next SID.

Optionally, the apparatus is arranged in a first node, and the apparatus further includes:
a configuration module, configured to configure a range of global SIDs and a range of local SIDs in a unified manner with other nodes; or configure a range of the global SID and a range of the local SID of the first node, and notify the range of the global SID and the range of the local SID of the first node to other nodes through an Interior Gateway Protocol (IGP)/ Boundary Gateway Protocol (BGP) protocol.
Optionally, the destination address includes the current SID and the next SID; the sending module is further configured to

copy the first SID and the second SID in the SID list to the destination address of the data packet, the first SID replacing the current SID, the second SID not replacing the next SID;
wherein the type of the current SID is the global SID, and the type of the next SID is the global SID; or the type of the current SID is the local SID, and the type of the next SID is the local SID; or the type of the current SID is the local SID, and the type of the next SID is the global SID.

According to a third aspect, a communication device is provided. The communication device includes: a processor, a memory, and a program stored on the memory and executable on the processor, wherein when the program is executed by the processor, the processor implements steps of the method according to the first aspect.
According to a fourth aspect, a readable storage medium is provided, wherein a program is stored on the readable storage medium, wherein when the program is executed by a processor, the processor implements the steps of the method according to the first aspect.

In this embodiment of the present disclosure, the SRv6 message overhead can be effectively decreased, and complexity of a network chip is reduced.

**BRIEF DESCRIPTION OF THE DRAWINGS**

Various other advantages and benefits will become apparent to those of ordinary skill in the art upon reading detailed description of preferred embodiments hereinafter. The drawings are for a purpose of illustrating preferred embodiments only and are not to be considered as limitation of the present disclosure. Moreover, in the drawings, same reference signs are used to represent same components. In the drawings:

FIG. 1 is a schematic diagram of an encapsulation format of a standard SRv6 extension header;
FIG. 2 is a comparison and analysis diagram of SR bearer efficiencies of different numbers of SIDs when a payload length 256B is used;
FIG. 3 is a schematic diagram of interfacing between an SR-MPLS network domain and an SRv6 network domain when a payload length 256B is used;
FIG. 4 is a schematic diagram of supporting a short SRv6 SID format;
FIG. 5 is a schematic diagram of a format of a 32-bit G-SID container;
FIG. 6 is a schematic diagram of hybrid coding of SRv6 SID and G-SID;
FIG. 7 is a flowchart of a message forwarding method according to embodiments of the present disclosure;
FIG. 8 is a first schematic diagram of an encapsulation format of a standard SRv6 extension header according to an embodiment of the present disclosure;
FIG. 9 is a second schematic diagram of an encapsulation format of a standard SRv6 extension header according to an embodiment of the present disclosure;
FIG. 10 is a first schematic diagram of a destination address according to an embodiment of the present disclosure;
FIG. 11 is a second schematic diagram of a destination address according to an embodiment of the present disclosure;
FIG. 12 is a third schematic diagram of a destination address according to an embodiment of the present disclosure;
FIG. 13 is a fourth schematic diagram of a destination address according to an embodiment of the present disclosure;
FIG. 14 is a schematic diagram of a message forwarding apparatus according to an embodiment of the present disclosure; and
FIG. 15 is a schematic diagram of a communication device according to an embodiment of the present disclosure.

**DETAILED DESCRIPTION**

I. Definition of a Short SRv6 SID Format

According to a standard SRv6 SID format, it can be seen that in a typical programmable application supporting a SRv6 network, the SID format is regular, and regularity of the SID format can be fully utilized to optimize the standard SRv6 SID format.

A typical 32-bit SRv6 short G-SID format is defined herein, and the G-SID is composed of a Node ID, a Function ID and optional Arguments (Args) in a standard 128-bit SID. The standard 128-bit SID format is referred to as a complete SID, which defines a standard SRv6 SID, and the 32-bit SID is a shortened G-SID, which is a changed part of the complete SID. The format is shown in FIG. 4.

Similarly, a G-SID of 16 bits may also be defined. The present disclosure is described temporarily with 32 bits as an example, and there are no special difference between the 16 bits and the 32 bits.

Conversion relationship between the complete SID and the short SID may be determined in following ways based on regularity of a SRv6 location identifier (Locator):

$$\text{the complete SID} = B \text{ (blocks, i.e., a general prefix)} + N \text{ (node ID)} + F \text{ (Function)} + A \text{ (Args) (optional)} + \text{padding (optional)};$$

$$\text{G-SID} = N + F \text{ (Function)} + A \text{ (Args) (optional)};$$

It can be seen therefrom that the G-SID plus a Common Prefix/an address block (Block) can form a complete SRv6 SID.

To support the G-SID, a short SRv6 SID format needs to be planned. For example, the Common Prefix is 96 bits, and the G-SID is 32 bits; for example, the Common Prefix is 64 bits, followed by the G-SID of 32 bits, and the remaining low 32 bits are 0.

II. Definition of a G-SID Container Format

When the short SID and the standard SID are arranged in a SRH SID list, it is required that the G-SID needs to be arranged in a 128-bit alignment manner in order to accurately locate the G-SID, that is, one row of 128 bits requires 4 32-bit shorten G-SIDs, or a plurality of the shortened G-SIDs of other lengths. If the arrangement is not full, padding is needed so that 128 bits are aligned.

For ease of understanding, this solution defines a concept of a G-SID container, which is 128 bits. One G-SID container may include:

(1) a standard SRv6 SID;
(2) multiple shortened SRv6 SIDs (G-SIDs), such as four 32-bits G-SIDs or eight 16-bit G-SIDs.

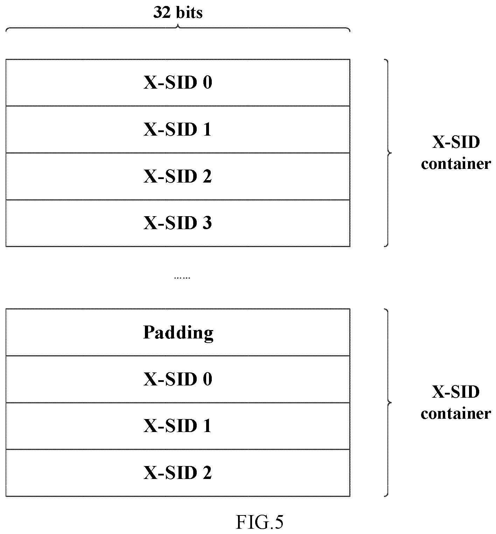

When multiple types of SIDs are mixedly arranged, 128-bit alignment needs to be ensured. When the 128 bits cannot be completely filled by the G-SIDs, padding is needed. Taking the 32-bit G-SID as an example, a possible format of the G-SID container is shown in FIG. 5.

Since multiple types of G-SID containers can be encoded in SRv6 SRH, this SRH is referred to as X-SRH which is implementation of a new SRv6 type which is referred to as X-SRv6. Details of a data plane of the X-SRv6 are described below.

III. Data plane mixture scheme of short labels and standard labels

To support multiple types of SIDs (especially the G-SIDs and the standard SRv6 SIDs) to be mixed in one SRH, there is a need to perform certain extension on an existing SRH. There is also a need to perform certain extension on a control plane of the SRv6. Here, a data plane of X-SRv6 is first introduced, and an extension solution of a control plane of the X-SRv6 is subsequently introduced.

A basic concept of the data plane is that classical 128-bit SRv6 SIDs and G-SIDs can be mixedly encoded in one SRH.

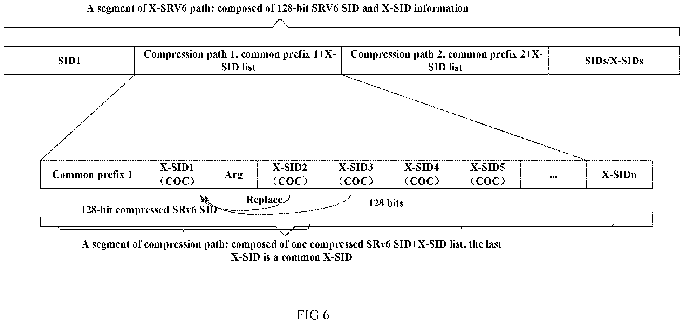

As shown in FIG. 6, a segment of an X-SRv6 path may consist of SRv6 sub-paths and SRv6 shortened sub-paths. The SRv6 sub-path is encoded by the SRv6 SID. The SRv6 short label sub-path is composed of a leading 128bit SRv6 SID that supports a short label and subsequent multiple short-label SIDs (G-SIDs). The end of the G-SID list should be bounded by the 128 bits. The next sub-path may be a standard 128bit SRv6 SID or a next segment of a SRv6 short label sub-path having a different prefix.

In order to identify the start and end of the SRv6 short label path in the SID list, that is, a boundary between the 128-bit SID and the 32-bit SID, several new types of flavors (Flavor) need to be added, and SIDs corresponding to the flavors are published, see Table 1.

Table 1

| SID Flavor | Description of Function |
|---|---|
| None | New flavor is not added. A default flavor of a SID indicates that the next is 128 bits SRv6 SID |
| Continue Of Compression (COC) 32 | Indicating the next is 32bit G-SID |
| COC16 | Indicating the next is 16bit G-SID |

The technical solutions in the embodiments of the present disclosure will be clearly and completely described below with reference to the accompanying drawings in the embodiments of the present disclosure. It is obvious that the described embodiments are a part, rather than all, of the embodiments of the present disclosure. All other embodiments obtained by a person of ordinary skill in the art based on the embodiments of the present disclosure without creative efforts shall fall within the protection scope of the present disclosure.

The terms "comprising" and any variations thereof in the specification and claims of the present disclosure are intended to cover non-exclusive inclusion, for example, processes, methods, systems, products, or devices that include a series of steps or units are not necessarily limited to those steps or units clearly listed, but may include other steps or units not expressly listed or inherent to these processes, methods, products, or devices. In addition, use of "and/or" in the specification and in the claims indicates at least one of the connected objects, such as A and/or B, indicating that there are three cases including only A exists alone, only B exists alone, and both A and B exist.

In the embodiments of the present disclosure, words such as "exemplary" or "for example" are used to represent an example, an illustration, or a description. Any embodiment or design scheme described as "exemplary" or "for example" in the embodiments of the present disclosure should not be construed as being more preferred or more advantageous over other embodiments or design schemes. Rather, the use of "exemplary" or "for example" is intended to present related concepts in a particular manner.

The techniques described herein are not limited to fifth generation mobile communication (5G) systems and subsequent evolved communications systems, and are not limited to Long Term Evolution (LTE)/LTE-Advanced (LTE-A) systems, and may also be used in various wireless communication systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), and other systems.

The terms "system" and "network" are often used interchangeably. The CDMA system may implement radio technologies such as CDMA2000, Universal Terrestrial Radio Access (UTRA), etc. UTRA includes Wideband CDMA (Wideband Code Division Multiple Access, WCDMA), and other CDMA variants. A TDMA system may implement radio technologies such as Global System for Mobile Communication (GSM). An OFDMA system may implement radio technologies such as Ultra Mobile Broadband (UMB), Evolved UTRA (E-UTRA), IEEE 802.11(Wi-Fi), IEEE 802.16 (WiMAX), IEEE 802.20, Fast Orthogonal Frequency Division Multiplexing (Flash-OFDM), etc. UTRA and E-UTRA are part of Universal Mobile Telecommunications System (UMTS). LTE and more advanced LTE (e.g., LTE-A) are new UMTS versions using E-UTRA. UTRA, E-UTRA, UMTS, LTE, LTE-A, and GSM are described in documents from the organization named "3rd Generation Partnership Project" (3GPP). CDMA2000 and UMB are described in documents from an organization named "3rd Generation Partnership Project 2" (3GPP2). The techniques described herein may be used in both the systems and radio technologies mentioned above, as well as other systems and radio technologies.

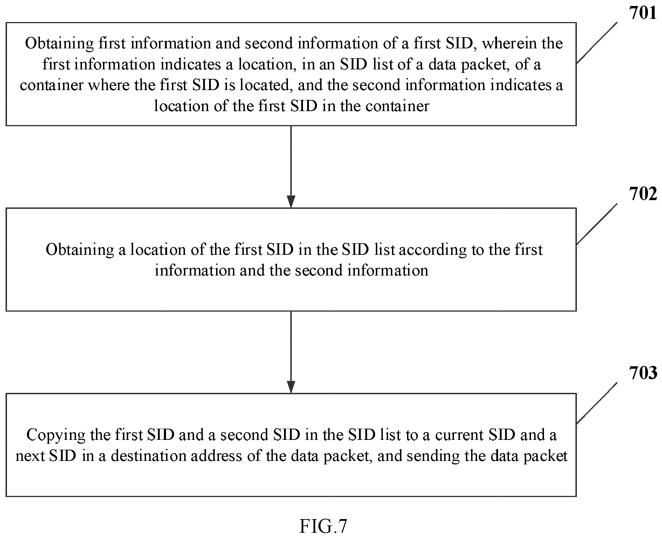

Referring to FIG. 7, an embodiment of the present disclosure provides a message processing method performed by a first node, and specific steps of this method include: step 701, step 702, and step 703.

Step 701: obtaining first information and second information of a first SID, wherein the first information indicates a location, in an SID list of a data packet, of a container where the first SID is located, and the second information indicates a location of the first SID in the container.

Step 702: obtaining a location of the first SID in the SID list according to the first information and the second information.

Step 703: copying the first SID and a second SID in the SID list to a current SID and a next SID in a destination address of the data packet, and sending the data packet, wherein the second SID is a next SID next to the first SID in the SID list, and the second information is greater than or equal to 1, or the second information is equal to 0.

In this embodiment of the present disclosure, the method further includes:
in case that the second information is equal to 1, then copying the first SID in the SID list to the current SID in the destination address of the data packet, and filling the next SID with a preset field.

In this embodiment of the present disclosure, copying the first SID and the second SID in the SID list to the destination address of the data packet and sending the data packet includes:
copying the first SID and the second SID in the SID list to the destination address of the data packet, the first SID replacing the current SID, and the second SID replacing the next SID, wherein a type of the current SID is a global SID, and a type of the next SID is a local SID.

In this embodiment of the present disclosure, copying the first SID and the second SID in the SID list to the destination address of the data packet, the first SID replacing the current SID, and the second SID replacing the next SID, includes:

determining whether the type of the current SID is the global SID, and whether the type of the next SID is the local SID;
in case that the type of the current SID is the global SID and the type of the next SID is the local SID, copying the first SID and the second SID in the SID list to the destination address of the data packet, the first SID replacing the current SID, and the second SID replacing the next SID.

In this embodiment of the present disclosure, the method further includes:

configuring a range of global SIDs and a range of local SIDs in a unified manner with other nodes; or,
configuring a range of the global SID and a range of the local SID of the first node, and notifying the range of the global SID and the range of the local SID of the first node to other nodes through an IGP/BGP protocol.

In this embodiment of the present disclosure, the destination address includes: the current SID and the next SID.

Copying the first SID and the second SID in the SID list to the destination address of the data packet and sending the data packet includes:

copying the first SID and the second SID in the SID list to the destination address of the data packet, the first SID replacing the current SID, the second SID not replacing the next SID;
wherein the type of the current SID is the global SID, and the type of the next SID is the global SID; or the type of the current SID is the local SID, and the type of the next SID is the local SID; or the type of the current SID is the local SID, and the type of the next SID is the global SID.

In this embodiment of the present disclosure, a SRv6 message overhead can be effectively decreased, and complexity of a network chip is reduced.

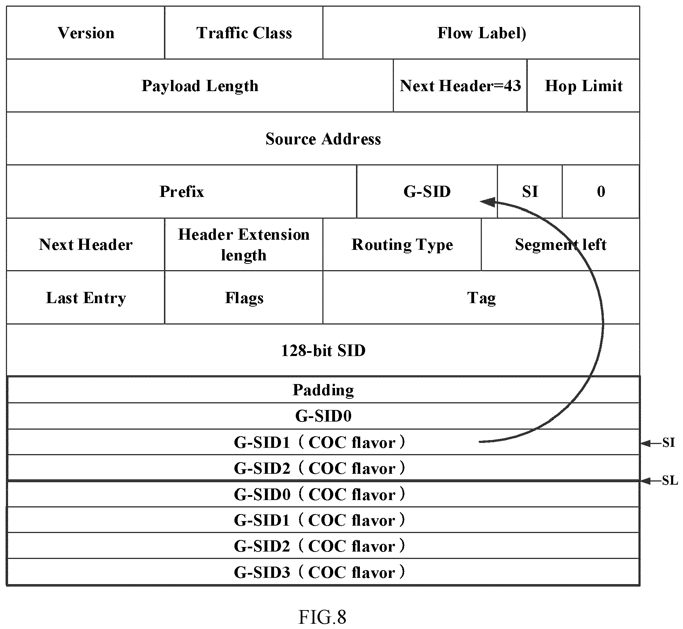

As shown in FIG. 8, a field is added to the IPv6 destination address, and the field is located at any position after the G-SID, for example, the field may be next to the G-SID, or may be last few bits of the destination address. The field is a G-SID Index (hereinafter referred to as SI) which identifies a location index of the G-SID in the container indicated by the current SL.

The field may having a specified length. A minimum length of the field is related to the number of G-SIDs that can be accommodated in one container, for example, the length of the G-SID is 32, four G-SIDs can be placed in one container, and then the minimum of the SI needs 2 bits.

The SI is used to indicate the location of the G-SID in each 128-bit G-SID container, and if the G-SID uses a 32-bit compression SID, then the value of the SI is 0-3; and if the G-SID uses a 16-bit compression SID, then the value of the SI is 0-7.

In this embodiment of the present disclosure, in order to further improve the compression efficiency, compression SIDs are divided into two classes. One class is used to identify the global SID, such as an END SID, and values of the class are taken from a global SID set (GIB); and one class is used to identify the local SID, for example, END. X SID of a specified link or END.DT SID of a VPN Context, values of the class are taken from a local SID set (LIB). In this way, in some cases, only one global SID or one local SID is replaced at a certain node; in some cases, at a certain node, both the global SID and the local SID need to be replaced at the same time.

In this embodiment of the present disclosure, the efficiency is relatively low for the case that both the global SID and the local SID need to be replaced at the same time. The present application proposes a method, i.e,, regardless of the class of the SID to be processed and the length of the SID, data having a length of $2 \times L$ is copied to the destination address each time, wherein L is the length of a SID having a minimum length. In this way, if a certain node only needs to use one global SID or one local SID, then a first SID having the length of L is used, and at the same time, SI -1; if a certain node needs to use both the global SID and the local SID at the same time, then 2 SIDs having the length of $2 \times L$ are used, and SI -2。

In this embodiment of the present disclosure, specific operation process is as follows:

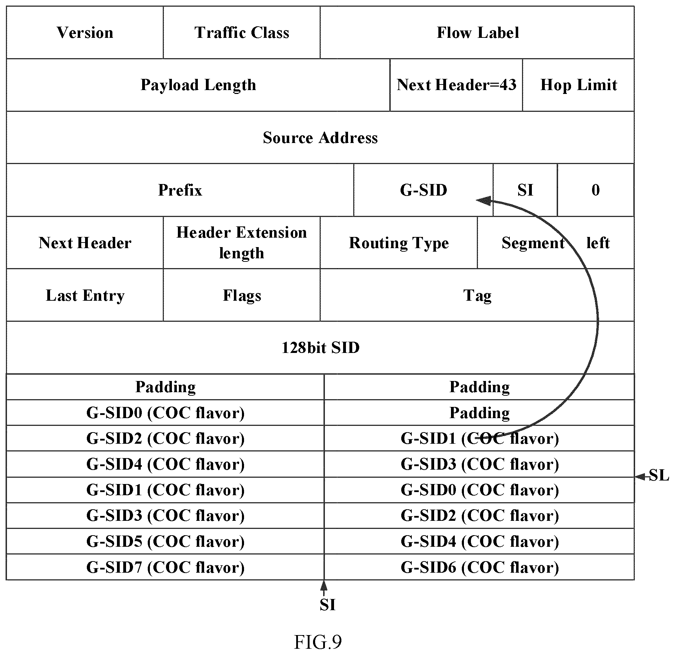

SI > 1, copying SI to point to the current G-SID and the next G-SID to destination addresses (DAs);
SI = 1, copying SI to point to the current G-SID and supplementing the next G-SID with all zero;
SI = 0, SL-- (SL subtracts one), and SI = 7, copying SI to point to the current G-SID and the next G-SID to the DAs; each time SI-- (SI subtracts one), only one G-SID length is moved, but two adjacent G-SIDs in the SID list of the SRH are moved to the DA, as shown in FIG. 9.

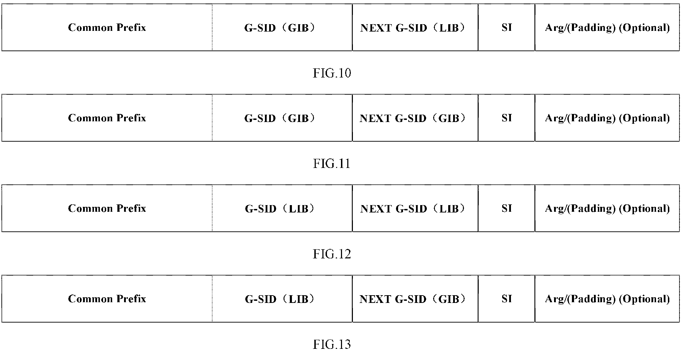

Scenario 1:
referring to FIG. 10, in two adjacent G-SIDs replacing the DAs, the first G-SID belongs to GIB, the second G-SID belongs to LIB, and operations of two G-SIDs at the same node can be completed through looking up a table once.

Scenario 2:
Referring to FIG. 11, two adjacent G-SIDs replacing the DAs both belong to GIBs, and NEXT G-SID belongs to invalid replacement

Scenario 3:
Referring to FIG. 12, two adjacent G-SIDs replacing the DAs both belong to LIBs, and NEXT G-SID belongs to invalid replacement.

Scenario 4:
Referring to FIG. 13, in two adjacent G-SIDs replacing the DAs, the first G-SID belongs to the LIB, the second G-SID belongs to GIB, and operations of two G-SIDs are definitely not at the same node, NEXT G-SID is an invalid replacement.

For invalid G-SID replacement that occurs in the above scenarios, following two methods may be used:

Solution 1: no pre-judgement is made before copying G-SIDs, two adjacent G-SIDs are copied as long as the SI meets the requirement. Only the first G-SID is valid when looking up the table, the NEXT G-SID is invalid, and the NEXT G-SID is changed into the current G-SID when replacing DA next time.

Solution 2: pre-judgement is made before copying G-SIDs, and only when the current G-SID belongs to the GIB and the NEXT G-SID belongs to the LIB, adjacent two G-SIDs are used to replace the DAs.

There are two cases:

Case 1: various network nodes uniformly define the range of GIB and LIB, for example, 16-bit compression SIDs, 0x0000-0xDFFF, belong to the GIB, 0xE000-0xFFFF belong to LIB: a forward plane of each node can directly make the determination.

Case 2: each network node independently defines ranges of GIBs and LIBs, and notifies by means of a control plane IGP/BGP protocol, and each node control plane can determine whether the G-SID belongs to the range of GIBs or the range of LIBs, but the forward plane does not have this information and is incapable of implementing the pre-judgement.

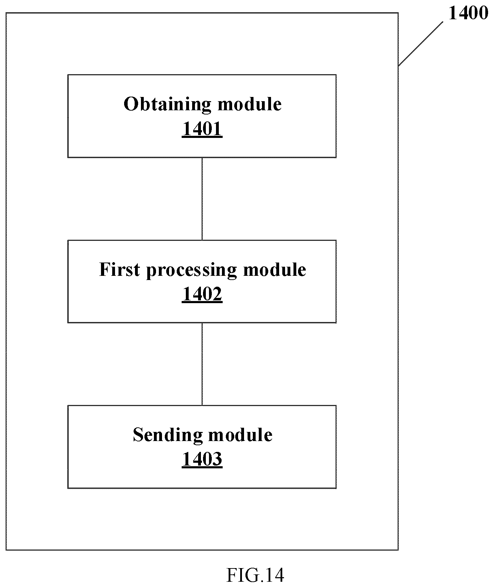

Referring to FIG. 14, an embodiment of the present disclosure provides a message processing apparatus. The apparatus 1400 includes:

an obtaining module 1401, configured to obtain first information and second information of a first Segment Identifier (SID), wherein the first information indicates a location, in an SID list of a data packet, of a container where the first SID is located, and the second information indicates a location of the first SID in the container;

a first processing module 1402, configured to obtain a location of the first SID in the SID list according to the first information and the second information;

a sending module 1403, configured to copy the first SID and a second SID in the SID list to a current SID and a next SID in a destination address of the data packet, and send the data packet, wherein the second SID is a next SID next to the first SID in the SID list, and the second information is greater than or equal to 1, or the second information is equal to 0.

In this embodiment of the present disclosure, the apparatus 1400 further includes:
a second processing module, configured to in case that the second information is equal to 1, copy the first SID in the SID list to the current SID in the destination address of the data packet, and fill the next SID with a preset field.

In this embodiment of the present disclosure, the sending module 1403 is further configured to:
copy the first SID and the second SID in the SID list to the destination address of the data packet, the first SID replacing the current SID, and the second SID replacing the next SID, wherein a type of the current SID is a global SID, and a type of the next SID is a local SID.

In this embodiment of the present disclosure, the sending module 1403 is further configured to:

determine whether the type of the current SID is the global SID, and whether the type of the next SID is the local SID;

in case that the type of the current SID is the global SID and the type of the next SID is the local SID, copy the first SID and the second SID in the SID list to the destination address of the data packet, the first SID replacing the current SID, and the second SID replacing the next SID.

In this embodiment of the present disclosure, the apparatus 1400 further includes:
a configuration module, configured to configure a range of global SIDs and a range of local SIDs in a unified manner with other nodes; or, configure a range of the global SID and a range of the local SID of the first node, and notify the range of the global SID and the range of the local SID of the first node to other nodes through an IGP/BGP protocol.

In this embodiment of the present disclosure, the destination address includes: the current SID and the next SID. The sending module 1403 is further configured to:

copy the first SID and the second SID in the SID list to the destination address of the data packet, the first SID replacing the current SID, the second SID not replacing the next SID;

wherein the type of the current SID is the global SID, and the type of the next SID is the global SID; or the type of the current SID is the local SID, and the type of the next SID is the local SID; or the type of the current SID is the local SID, and the type of the next SID is the global SID.

The apparatus provided in the embodiments of the present disclosure may perform the method in the embodiment shown in FIG. 7, and implementation principles and technical effects of the apparatus and the method are similar, and details are not described herein again.

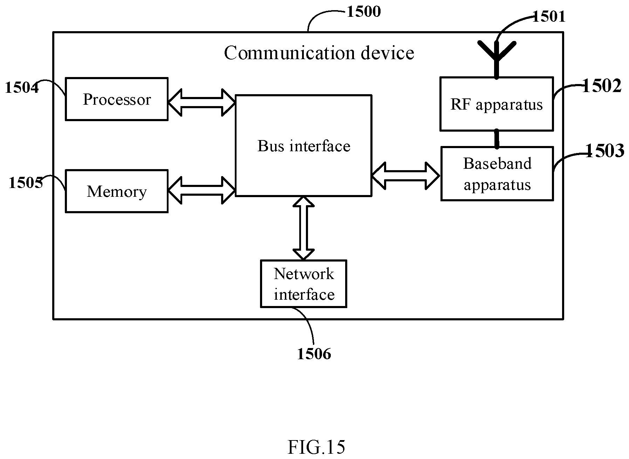

Embodiments of the present disclosure further provide a communication device. As shown in FIG. 15, the communications device 1500 includes an antenna 1501, a radio frequency apparatus 1502, and a baseband apparatus 1503. The antenna 1501 is connected to the radio frequency apparatus 1502. In the uplink direction, the radio frequency apparatus 1502 receives information through the antenna 1501, and sends the received information to the baseband apparatus 1503 for processing. In the downlink direction, the baseband apparatus 1503 processes the information to be sent and sends the information to the radio frequency apparatus 1502, and the radio frequency apparatus 1502 processes the received information and then sends the processed information through the antenna 1501.

The radio frequency apparatus 1502 may be located in the baseband apparatus 1503, and the method executed by the communication device in the foregoing embodiment may be implemented in the baseband apparatus 1503, and the baseband apparatus 1503 includes a processor 1504 and a memory 1505.

For example, the baseband apparatus 1503 may include at least one baseband board, the baseband board is provided with a plurality of chips, as shown in FIG. 15, one of the chips is, for example, a processor 1504 connected to the memory 1505 and configured to invoke a program in the memory 1505 to perform operations of the communication device shown in the foregoing method embodiments.

The baseband apparatus 1503 may further include a network interface 1506 configured to interact with the radio frequency apparatus 1502, wherein the interface is, for example, a Common Public Radio Interface (CPRI).

Specifically, the communication device of the embodiments of the present disclosure further includes instructions or programs stored on the memory 1505 and executable on the processor 1504, wherein when the processor 1504 invokes the instructions or programs in the memory 1505, the processor 1504 executes the methods executed by the modules shown in FIG. 14, and achieves the same technical effect, and detailed description is not repeated here for avoiding repetition.

Embodiments of the present disclosure further provide a readable storage medium, wherein a program or an instruction is stored on the readable storage medium, and when the program or THE instruction is executed by a processor, each process of the method IN THE embodiment shown in FIG. 7 is implemented by the processor, and the same technical effect can be achieved. To avoid repetition, details are not described herein again.

The processor is a processor in the terminal in the foregoing embodiment. The readable storage medium includes a computer readable storage medium, such as a computer Read-Only Memory (ROM), a Random Access Memory (RAM), a magnetic disk, or an optical disc.

The steps of the method or the algorithm described in conjunction with contents disclosed by the present disclosure may be implemented in a hardware manner, or may be implemented in a manner in which a processor executes a software instruction. The software instruction may be composed of corresponding software modules, and the software modules may be stored in a RAM, a flash memory, a ROM, an Erasable Programmable Read-Only Memory (EPROM), an Electrically Erasable Programmable Read Only Memory (EEPROM), a register, a hard disk, and a mobile hard disk, read only optical disks or any other form of storage medium well known in the art. An exemplary storage medium is coupled to a processor to enable the processor to read information from the storage medium and write information to the storage medium. Certainly, the storage medium may also be a component of the processor. The processor and the storage medium may be carried in an Application Specific Integrated Circuit (ASIC). In addition, the ASIC may be carried in a core network interface device. Certainly, the processor and the storage medium may also exist in the core network interface device as discrete components.

Those skilled in the art should be aware that, in the foregoing one or more examples, functions described in the present disclosure may be implemented by hardware, software, firmware, or any combination thereof. When implemented using software, these functions may be stored in a computer-readable medium or transmitted as one or more instructions or codes on a computer-readable medium. The computer-readable medium includes a computer storage medium and a communication medium, wherein the communication medium includes any medium that facilitates transfer of a computer program from one place to another. The storage medium may be any available medium accessible by a general purpose or special purpose computer.

Objectives, technical solutions, and beneficial effects of the present disclosure are further described in detail by the above detailed description, and it should be understood that the foregoing is merely specific embodiments of the present disclosure and is not intended to limit the protection scope of the present disclosure, and any modifications, equivalent substitutions, improvements, etc. made on the basis of the technical solutions of the present disclosure shall fall within the protection scope of the present disclosure.

Those skilled in the art should understand that the embodiments of the present disclosure may be provided as a method, a system, or a computer program product. Therefore, the embodiments of the present disclosure may be in the form of an entirely hardware embodiment, an entirely software embodiment, or an embodiment combining software and hardware aspects. Moreover, the embodiments of the present disclosure may take the form of a computer program product implemented on one or more computer-usable storage media (including but not limited to a magnetic disk memory, a CD-ROM, an optical memory, etc.) including computer-usable program codes.

Embodiments of the present disclosure are described with reference to flowcharts and/or block diagrams of methods, apparatuses (systems), and computer program products according to embodiments of the present disclosure. It should be understood that each flow and/or block in the flowcharts and/or block diagrams, and combinations of flows and/or blocks in the flowcharts and/or block diagrams, can be implemented by computer program instructions. These computer program instructions may be provided to a processor of a general purpose computer, a special purpose computer, an embedded processor, or other programmable data processing devices to generate a machine, such that instructions executed by the processor of the computer or other programmable data processing devices generate means for implementing functions specified in one or more flows of the flowcharts and/or one or more blocks of the block diagrams.

These computer program instructions may also be stored in a computer-readable memory that can direct a computer or other programmable data processing device to operate in a particular manner such that the instructions stored in the computer-readable memory produce an article that includes an instruction means. The instruction means implements the functions specified in one or more flows of the flowcharts and/or one or more blocks of the block diagrams.

These computer program instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowcharts and/or one or more blocks of the block diagrams.

Obviously, those skilled in the art can make various modifications and variations to the embodiments of the present disclosure without departing from the spirit and the scope of the present disclosure. Thus, if these modifications and variations of the embodiments of the present disclosure fall within the scope of the claims and their equivalents, the present disclosure is also intended to encompass these modifications and variations.

## Claims

1. A message processing method performed by a first node, the method comprising:

   obtaining first information and second information of a first Segment Identifier (SID), wherein the first information indicates a location, in an SID list of a data packet, of a container where the first SID is located, and the second information indicates a location of the first SID in the container;
   obtaining a location of the first SID in the SID list according to the first information and the second information;
   copying the first SID and a second SID in the SID list to a current SID and a next SID in a destination address of the data packet, and sending the data packet; wherein the second SID is a next SID next to the first SID in the SID list, and the second information is greater than or equal to 1, or the second information is equal to 0.

2. The method according to claim 1, further comprising:
   in case that the second information is equal to 1, copying the first SID in the SID list to the current SID in the destination address of the data packet, and filling the next SID with a preset field.

3. The method according to claim 1, wherein copying the first SID and the second SID in the SID list to the destination address of the data packet and sending the data packet comprises:
   copying the first SID and the second SID in the SID list to the destination address of the data packet, the first SID replacing the current SID, and the second SID replacing the next SID, wherein a type of the current SID is a global SID, and a type of the next SID is a local SID.

4. The method according to claim 3, wherein copying the first SID and the second SID in the SID list to the destination address of the data packet, the first SID replacing the current SID, and the second SID replacing the next SID, comprises:

   determining whether the type of the current SID is the global SID, and whether the type of the next SID is the local SID;
   in case that the type of the current SID is the global SID and the type of the next SID is the local SID, copying the first SID and the second SID in the SID list to the destination address of the data packet, the first SID replacing the current SID, and the second SID replacing the next SID.

5. The method according to claim 4, further comprising:

   configuring a range of global SIDs and a range of local SIDs in a unified manner with other nodes; or
   configuring a range of the global SID and a range of the local SID of the first node, and notifying the range of the global SID and the range of the local SID of the first node to other nodes through an Interior Gateway Protocol (IGP)/ Boundary Gateway Protocol (BGP) protocol.

6. The method according to claim 1, wherein the destination address comprises the current SID and the next SID; copying the first SID and the second SID in the SID list to the destination address of the data packet and sending the data packet comprises:

copying the first SID and the second SID in the SID list to the destination address of the data packet, the first SID replacing the current SID, the second SID not replacing the next SID; wherein the type of the current SID is the global SID, and the type of the next SID is the global SID; or the type of the current SID is the local SID, and the type of the next SID is the local SID; or the type of the current SID is the local SID, and the type of the next SID is the global SID.

7. A message processing apparatus, comprising:

an obtaining module, configured to obtain first information and second information of a first Segment Identifier (SID), wherein the first information indicates a location, in an SID list of a data packet, of a container where the first SID is located, and the second information indicates a location of the first SID in the container; a first processing module, configured to obtain a location of the first SID in the SID list according to the first information and the second information; a sending module, configured to copy the first SID and a second SID in the SID list to a current SID and a next SID in a destination address of the data packet, and send the data packet; wherein the second SID is a next SID next to the first SID in the SID list, and the second information is greater than or equal to 1, or the second information is equal to 0.

8. The apparatus according to claim 7, further comprising: a second processing module, configured to in case that the second information is equal to 1, copy the first SID in the SID list to the current SID in the destination address of the data packet, and fill the next SID with a preset field.

9. The apparatus according to claim 7, wherein the sending module is further configured to: copy the first SID and the second SID in the SID list to the destination address of the data packet, the first SID replacing the current SID, and the second SID replacing the next SID, wherein a type of the current SID is a global SID, and a type of the next SID is a local SID.

10. The apparatus according to claim 9, wherein the sending module is further configured to:

determine whether the type of the current SID is the global SID, and whether the type of the next SID is the local SID; in case that the type of the current SID is the global SID and the type of the next SID is the local SID, copy the first SID and the second SID in the SID list to the destination address of the data packet, the first SID replacing the current SID, and the second SID replacing the next SID.

11. The apparatus according to claim 9, wherein the apparatus is arranged in a first node, and the apparatus further comprises: a configuration module, configured to configure a range of global SIDs and a range of local SIDs in a unified manner with other nodes; or configure a range of the global SID and a range of the local SID of the first node, and notify the range of the global SID and the range of the local SID of the first node to other nodes through an Interior Gateway Protocol (IGP)/ Boundary Gateway Protocol (BGP) protocol.

12. The apparatus according to claim 7, wherein the destination address comprises the current SID and the next SID; the sending module is further configured to

copy the first SID and the second SID in the SID list to the destination address of the data packet, the first SID replacing the current SID, the second SID not replacing the next SID; wherein the type of the current SID is the global SID, and the type of the next SID is the global SID; or the type of the current SID is the local SID, and the type of the next SID is the local SID; or the type of the current SID is the local SID, and the type of the next SID is the global SID.

**13.** A communication device, comprising:

a processor, a memory, and a program stored on the memory and executable on the processor, wherein when the program is executed by the processor, the processor implements steps of the method according to any one of claims 1-6.

**14.** A readable storage medium, wherein a program is stored on the readable storage medium, wherein when the program is executed by a processor, the processor implements the steps of the method according to any one of claims 1-6.

| Version | Traffic Class | Flow Label | |
|---|---|---|---|
| Effective Payload Length | | Next Header=43 | Hop Limit |
| Source Address | | | |
| Destination Address | | | |
| Next Header | Header Extension length | Routing Type =4 | Segment left |
| Last Entry | Flags | Tag | |
| Segment list [0](128-bit IPv6 address) | | | |
| ...... | | | |
| Segment list [n](128-bit IPv6 address) | | | |
| Optional TLV Objects (variable) | | | |
| Payload | | | |

IPV6 header

SRH extension

FIG.1

Comparison between SR bearer efficiencies in cases of different numbers of SIDs when a payload length is 256B

FIG.2

SR-MPLS network link utilization rate: 89%, in case of 100GE, 256Byte message, and 8-layer SID

SRv6 network link utilization rate: 67%, in case of 100GE link, 256Byte message, and 8-layer SID

FIG.3

FIG.4

**32 bits**

| | |
|---|---|
| X-SID 0 | |
| X-SID 1 | X-SID |
| X-SID 2 | container |
| X-SID 3 | |

......

| | |
|---|---|
| Padding | |
| X-SID 0 | X-SID |
| X-SID 1 | container |
| X-SID 2 | |

FIG.5

A segment of X-SRV6 path: composed of 128-bit SRV6 SID and X-SID information

| SID1 | Compression path 1, common prefix 1+X-SID list | Compression path 2, common prefix 2+X-SID list | SIDs/X-SIDs |
|---|---|---|---|

| Common prefix 1 | X-SID1 (COC) | Arg | X-SID2 (COC) | X-SID3 (COC) | X-SID4 (COC) | X-SID5 (COC) | ... | X-SIDn |
|---|---|---|---|---|---|---|---|---|

128-bit compressed SRv6 SID    Replace    128 bits

A segment of compression path: composed of one compressed SRv6 SID+X-SID list, the last
X-SID is a common X-SID

FIG.6

701

Obtaining first information and second information of a first SID, wherein the first information indicates a location, in an SID list of a data packet, of a container where the first SID is located, and the second information indicates a location of the first SID in the container

702

Obtaining a location of the first SID in the SID list according to the first information and the second information

703

Copying the first SID and a second SID in the SID list to a current SID and a next SID in a destination address of the data packet, and sending the data packet

FIG.7

| Version | Traffic Class | Flow Label) | | |
|---|---|---|---|---|
| Payload Length | | | Next Header=43 | Hop Limit |
| Source Address | | | | |
| Prefix | | G-SID | | SI | 0 |
| Next Header | Header Extension length | Routing Type | | Segment left |
| Last Entry | Flags | Tag | | |
| 128-bit SID | | | | |
| Padding | | | | |
| G-SID0 | | | | |
| G-SID1（COC flavor） | | | | ←SI |
| G-SID2（COC flavor） | | | | |
| G-SID0（COC flavor） | | | | ←SL |
| G-SID1（COC flavor） | | | | |
| G-SID2（COC flavor） | | | | |
| G-SID3（COC flavor） | | | | |

FIG.8

| Version | Traffic Class | Flow Label | |
|---|---|---|---|
| Payload Length | | Next Header=43 | Hop Limit |
| Source Address | | | |
| Prefix | | G-SID | SI | 0 |
| Next Header | Header Extension length | Routing Type | Segment left |
| Last Entry | Flags | Tag | |
| 128bit SID | | | |
| Padding | Padding | |
| G-SID0 (COC flavor) | Padding | |
| G-SID2 (COC flavor) | G-SID1 (COC flavor) | |
| G-SID4 (COC flavor) | G-SID3 (COC flavor) | |
| G-SID1 (COC flavor) | G-SID0 (COC flavor) | |
| G-SID3 (COC flavor) | G-SID2 (COC flavor) | |
| G-SID5 (COC flavor) | G-SID4 (COC flavor) | |
| G-SID7 (COC flavor) | G-SID6 (COC flavor) | |

SL

SI

FIG.9

| Common Prefix | G-SID（GIB） | NEXT G-SID（LIB） | SI | Arg/(Padding) (Optional) |
|---|---|---|---|---|

FIG.10

| Common Prefix | G-SID（GIB） | NEXT G-SID（GIB） | SI | Arg/(Padding) (Optional) |
|---|---|---|---|---|

FIG.11

| Common Prefix | G-SID（LIB） | NEXT G-SID（LIB） | SI | Arg/(Padding) (Optional) |
|---|---|---|---|---|

FIG.12

| Common Prefix | G-SID（LIB） | NEXT G-SID（GIB） | SI | Arg/(Padding) (Optional) |
|---|---|---|---|---|

FIG.13

1400

Obtaining module
1401

First processing module
1402

Sending module
1403

FIG.14

FIG.15

## INTERNATIONAL SEARCH REPORT

| | International application No. |
|---|---|
| | **PCT/CN2021/129000** |

**A.  CLASSIFICATION OF SUBJECT MATTER**

H04L 12/721(2013.01)i;  H04L 12/741(2013.01)i

According to International Patent Classification (IPC) or to both national classification and IPC

**B.  FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; IETF: 分段标识, 目的地址, 位置, SID, segment ID, location, position, DA, destination address

**C.  DOCUMENTS CONSIDERED TO BE RELEVANT**

| Category* | Citation of document, with indication, where appropriate, of the relevant passages | Relevant to claim No. |
|---|---|---|
| PX | CN 113556284 A (CHINA MOBILE COMMUNICATION LTD., RESEARCH INSTITUTE et al.) 26 October 2021 (2021-10-26)<br>description, paragraphs [0074]-[0330], and figures 1-15 | 1-14 |
| PX | CN 112583745 A (HUAWEI TECHNOLOGIES CO., LTD.) 30 March 2021 (2021-03-30)<br>description, paragraphs [0004]-[0154], and figures 1-10 | 1-14 |
| X | Z.Li et al. "Generalized Segment Routing Header Draft-Lc-6man-Generalized-Srh-01"<br>*SPRING Working Group Internet-Draft*, 14 August 2020 (2020-08-14),<br>pp. 1-18 | 1-14 |
| A | CN 111541613 A (PENG CHENG LABORATORY) 14 August 2020 (2020-08-14)<br>entire document | 1-14 |
| A | Z.Li et al. "Compressed SRv6 Network Programming Draft-Li-Spring-Compressed-Srv6-Np-00"<br>*SPRING Working Group Internet-Draft*, 22 July 2019 (2019-07-22),<br>pp. 1-13 | 1-14 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 November 2021** | **13 December 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/129000**

| Patent document cited in search report | | | Publication date (day/month/year) | Patent family member(s) | | | Publication date (day/month/year) |
|---|---|---|---|---|---|---|---|
| CN | 113556284 | A | 26 October 2021 | None | | | |
| CN | 112583745 | A | 30 March 2021 | WO | 2021056945 | A1 | 01 April 2021 |
| CN | 111541613 | A | 14 August 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011321949